# EUROPÄISCHE PATENTANMELDUNG

(11) **EP 1 772 655 A1**
(43) Veröffentlichungstag der Anmeldung: **11.04.2007**
(21) Anmeldenummer: 05105386.6
(22) Anmeldetag: 17.06.2005
(51) Int. Cl.: F16H 63/42

(54) **Anzeigeeinrichtung für ein automatisches Getriebe in einem Kraftfahrzeug**

(71) Anmelder: Ford Global Technologies, LLC, Dearborn, MI 48126 (US)
(72) Erfinder: Oeltjebruns, Thomas, 41542, Dormagen (DE)
(74) Vertreter: Dörfler, Thomas

(57) **Zusammenfassung**

Die Erfindung betrifft eine Anzeigeeinrichtung für ein automatisches Getriebe in einem Kraftfahrzeug, mit einer elektrischen Ganganzeige (2) der gewählten Fahrstufe, mit einer Gangwähleinrichtung (4), bei der mittels eines Schalthebels (5) die Fahrstufen (7) geschaltet werden können, und einem Gangschalter (13), der Signale für zumindest eine der gewählten Fahrstufen (7) erzeugt.

Sie ist dadurch gekennzeichnet, daß Gangschalter (13) und Ganganzeige (2) über eine Anzeigesteuerung (12) so elektrisch miteinander verbunden sind, daß bei ausgeschalteter Zündung des Fahrzeuges die Ganganzeige (2) zumindest eine vom Gangschalter (13) ermittelte Fahrstufe zur Anzeige bringt, kann bei ausgeschalteter Zündung die Ganganzeige (2) aktiv bleiben. Da bei Fahrzeugen mit einer Ganganzeige (2) diese ohnehin vorhanden ist, entsteht kein zusätzlicher Bauaufwand, wenn Gangschalter (13) und Ganganzeige (2) direkt miteinander verbunden sind.

## Beschreibung

Die Erfindung betrifft eine Anzeigeeinrichtung für ein automatisches Getriebe in einem Kraftfahrzeug nach dem Oberbegriff des Anspruches 1.

Aus der US 6019294 ist eine Anzeigeeinrichtung für ein automatisches Getriebe in einem Kraftfahrzeug bekannt, bei der eine elektrische Ganganzeige die gewählten Fahrstufen anzeigt. Mittels eines Schalthebels einer Gangwähleinrichtung wird die Fahrstufe des automatischen Getriebes gewählt. Im Getriebe greift ein Gangschalter die Stellung einer Rastscheibe ab, wobei die verschiedenen Stellungen den verschiedenen gewählten Gangstufen entsprechen. Das Signal des Gangschalters wird auf ein elektrisches Steuermodul übertragen, welches wiederum die elektrische Ganganzeige ansteuert.

Nachteilig ist hier, daß das Signal des Gangschalters im Getriebe erzeugt wird und dort abgegriffen wird. Bei heutigen automatischen Getrieben, die über elektronische Getriebesteuergeräte verfügen, ist damit ein separater Betrieb der Ganganzeige nicht möglich. Dies ist vor allem nachteilhaft, wenn bei ausgeschalteter Zündung das nicht korrekte Einlegen der Parksperre überprüft und angezeigt werden soll. Dann muß die gesamte Getriebesteuereinheit mit Strom versorgt werden, was zu einer raschen Entladung der Fahrzeugbatterie führt, wenn die Parksperre trotz der Anzeige des Nichteinlegens vom Fahrer nicht nachträglich korrekt eingelegt wird.

Eine Lösung für dieses Problem ist aus der US 4482885 bekannt, bei der ein Parksperrenschalter am Wählhebel angeordnet ist, der das korrekte Einlegen der Parksperre detektiert. Dieser Schalter ist in Reihe geschaltet mit einem Schalter zum Erkennen der Anwesenheit des Fahrers, gezeigt ist ein Sitzschalter, der schaltet, sobald der Fahrer sich vom Sitz erhebt. Verläßt der Fahrer den Fahrersitz trotz nicht korrekt eingelegter Parksperre, wird ein Warnsignal ausgelöst.

Nachteilig ist hier, daß zusätzlich mindestens ein Sitzschalter und eine zusätzliche Warneinrichtung benötigt wird, wodurch der Bauaufwand für diese Warneinrichtung relativ hoch ist.

Es ist eine Aufgabe der Erfindung, eine Anzeigeeinrichtung für ein automatisches Getriebe in einem Kraftfahrzeug so weiterzubilden, daß bei einem falsch eingelegten Gang eines Automatikgetriebes nach Abschalten der Zündung die Fahrzeugbatterie vorzeitig durch den hohen Stromverbrauch der Getriebesteuereinheit entleert wird. Eine weitere Aufgabe ist es, die Schaltung mit möglichst geringem Bauaufwand zu realisieren.

Gelöst werden diese Aufgaben mit den Merkmalen des Anspruchs 1.

Indem Gangschalter und Ganganzeige über eine Anzeigesteuerung so elektrisch miteinander verbunden sind, daß bei ausgeschalteter Zündung des Fahrzeuges die Ganganzeige zumindest eine vom Gangschalter ermittelte Fahrstufe zur Anzeige bringt, kann bei ausgeschalteter Zündung die Ganganzeige aktiv bleiben. Da bei Fahrzeugen mit einer Ganganzeige diese ohnehin vorhanden ist, entsteht kein zusätzlicher Bauaufwand, wenn Gangschalter und Ganganzeige direkt miteinander verbunden sind. Dabei kann diese Verbindung über ein separates Kabel laufen, oder aber auch über einen elektrischen Datenbus, der auch bei ausgeschalteter Zündung aktiv ist.

Damit kann auch die Anzeigeeinrichtung unabhängig von einer Getriebesteuereinheit betrieben werden, die einen relativ hohen Stromverbrauch aufweist. Damit wird verhindert, daß bei einem falsch eingelegten Gang eines Automatikgetriebes nach Abschalten der Zündung die Fahrzeugbatterie vorzeitig durch den hohen Stromverbrauch der Getriebesteuereinheit entleert wird. Es ist deshalb vorteilhaft, wenn die Stromversorgung für Ganganzeige und Gangschalter unabhängig von der Stromversorgung für ein Getriebesteuergerät ist.

Damit können bei ausgeschalteter Zündung Ganganzeige und Gangschalter mit einem geringem Strom versorgt werden, während das Getriebesteuergerät ausgeschaltet ist. Denkbar ist auch, daß nach dem Ausschalten der Zündung das Getriebesteuergerät noch eine bestimmte Zeit aktiv ist und dann ausgeschaltet wird. Dann können noch weitere Anzeigen aufgrund des Getriebesteuergerätes gezeigt werden, solange dies aktive ist. Z. B. kann das Getriebesteuergerät solange eingeschaltet bleiben, bis das Fahrzeug verschlossen wurde. Erst dann wird auf die Anzeigesteuerung umgeschaltet.

Schaltungstechnisch kann die Ganganzeige mit Gangschalter so aufgebaut sein, daß in die Ganganzeige eine entsprechende Anzeigesteuerung integriert ist. Diese Anzeigesteuerung ist eine Auswerteelektronik, die die Signale des Gangschalters interpretiert und in Signale für eine entsprechende Anzeige, z. B. die Symbole für die Fahrstufen, P, R, N, D, 3, 2, 1 usw. umwandelt. Dabei kann diese Auswerteelektronik auch als separates Anzeigemodul aufgebaut sein, also nicht direkt mit eigentlichen Ganganzeige verbunden sein. Die Ganganzeige muß auch nicht zwangsläufig das Schaltschema PRND... wiedergeben. Ausreichend für die erfinderische Ganganzeige ist, daß ein entsprechende optische Warnung angezeigt wird, die auch aus einem einzelnen Lichtsignal bestehen kann. Dieses optische Warnsignal kann auch mit einem zusätzlichen akustischen Warngeber gekoppelt sein. Wichtig ist hier, daß Ganganzeige, Anzeigesteuerung und Gangschalter unabhängig von anderen Steuergeräten, insbesondere dem Getriebesteuergerät, bei ausgeschalteter Zündung betrieben werden können.

Die Ganganzeige kann auf jede mögliche Art aufgebaut sein, z. B. als Plasmabildschirm, oder aus einzelnen Leuchtzeichen, entweder dargestellt durch Leuchtdioden oder aus einem hinterleuchteten Schirm, oder ähnlichen Maßnahmen. Die Ganganzeige kann aber auch aus einer mechanischen Anzeige der eingelegten Gänge bestehen, die mit einer zusätzlichen Beleuchtung versehen ist. Die Ganganzeige kann an jeder geeigneten Stelle im Fahrzeug angebracht sein, vorzugsweise aber im Instrumentenbrett und/oder an der Gangwähleinrichtung selber.

Vorteilhaft ist die Ganganzeige an der Gangwähleinrichtung die primäre Anzeige, die also für den Fahrer jederzeit sichtbar ist, während im Instrumentenbrett die Ganganzeige sekundär ist. Während des normalen Fahrbetriebs kann z. B. die sekundäre Ganganzeige im Instrumentenbrett abgeschaltet sein. Erst bei ausgeschalteter Zündung wird diese aktiviert, wenn P nicht korrekt eingelegt ist. Die sekundäre Anzeige kann aber auch, wie üblich, dauernd während des Fahrbetriebes angeschaltet bleiben.

Vorteilhaft ist, wenn die Ganganzeige bei ausgeschalteter Zündung nur dann anzeigt, wenn der Schalthebel in bestimmten Fahrstufen steht. Es ist nicht immer und in allen Situationen erwünscht, daß ein Alarm angezeigt wird, z. B. beim Abschleppen oder in der Werkstatt. Dann zeigt die Anzeige nur an, wenn z. B. die Fahrstufen R, D, 1, 2 usw. eingelegt sind, nicht aber, wenn P oder N eingelegt sind.

Besonders Vorteilhaft ist, wenn die Ganganzeige bei ausgeschalteter Zündung nur dann anzeigt, wenn die der Schalthebel nicht in der Fahrstufe P ist. Dies entspricht der bekannten Warneinrichtung für die Parksperre. Dabei kann die Anzeige darin bestehen, daß nur das Symbol P in der Ganganzeige aufleuchtet. Es können aber auch mehrere oder alle Symbole aufleuchten, z. B. D, N und R. Es kann auch ein eigenes Symbol oder Warnlampe auf der Ganganzeige aktiviert werden. Zusätzlich können alle diese Symbole und Lampen auch blinken, wenn P oder die vorher bezeichneten Fahrstufen nicht korrekt eingelegt sind.

Unabhängig von der Funktionalität der Anzeigeeinrichtung bei ausgeschalteter Zündung kann die Ganganzeige auch bei eingeschalteter Zündung des Fahrzeuges die vom Gangschalter ermittelte Fahrstufe zur Anzeige bringen. In diesem Fall wird die sowieso vorhandene Ganganzeige benutzt und um das Merkmal erweitert, daß diese direkt mit dem Gangschalter bei ausgeschalteter Zündung zusammenwirkt. Wichtig ist hier, daß die Ganganzeige unabhängig von anderen, stromverbrauchenden Steuergeräten, insbesondere dem Getriebesteuergerät, betrieben werden kann.

Der Gangschalter kann mit einem Schalthebel der Gangwähleinrichtung zusammenwirken. Z. B. kann der Schalthebel am Fuß eine bekannte Rastscheibe aufweisen, die vom Gangschalter abgegriffen wird und dieser entsprechende Signale erzeugt. Prinzipiell kann der Gangschalter auf viele verschiedene Arten realisiert werden, z. B. mittels Drehpotentiometer, Hall-Sensoren, Widerstandskaskaden etc.

Der Gangschalter kann auch nur die Position P ermitteln. In diesem Fall ist der Gangschalter und die dazugehörige Auswerteelektronik sehr einfach und kostengünstig herstellbar.

Vorteilhaft kann der Gangschalter auch im automatischen Getriebe angeordnet sein, entweder, weil dort sowieso ein Gangschalter vorgesehen ist. Oder aber dieser ist notwendig, weil keine mechanische Verbindung mehr zwischen Wähleinrichtung und Getriebe besteht, z. B. bei einer "Shift by wire" Steuerung.

Auf jeden Fall soll der im Getriebe angeordnete Gangschalter unabhängig vom Getriebesteuergerät Signale an die Ganganzeige liefern. Dies bedeutet, daß der Gangschalter ein Signal an die Anzeigesteuerung entweder über ein separates Kabel, oder aber über einen Datenbus sendet, der auch bei ausgeschalteter Zündung aktiv ist. Vorteilhaft ist dabei, wenn auch gleichzeitig die Getriebesteuereinheit mit der Anzeigesteuerung verbunden ist. Dann kann im Fahrbetrieb die Anzeigesteuerung von der Getriebesteuereinheit die Signale erhalten, während bei ausgeschalter Zündung und abgeschalteter Zündung die Ansteuerung der Anzeigesteuerung über den Gangschalter erfolgt.

Bei der Verwendung der Anzeigeeinrichtung im Kraftfahrzeug wird vorteilhafterweise eine Schlüsselsperre für den Zündschlüssel des Kraftfahrzeuges aufgrund von durch Ganganzeige, Anzeigesteuerung und/oder Gangschalter erzeugter elektrischer Signale aktiviert oder deaktiviert. Damit wird verhindert, daß der Fahrer die Zündung ausschaltet und dann versucht, den Zündschlüssel abzuziehen, ohne daß die Parksperre eingelegt wird. Weist das Kraftfahrzeug ein schlüsselloses Zugangssystem, z. B. mit Scheckkarten auf, kann analog zur Zündschlüsselsperre auch die Scheckkarte gesperrt werden, wenn die Parksperre nicht korrekt eingelegt ist.

Weitere Einzelheiten ergeben sich aus den beigefügten Darstellungen. Es zeigen:
- Figur 1: eine erste Ausführung der erfinderischen Anzeigeeinrichtung mit Gangschalter am einer Rastscheibe des Schalthebels;
- Figur 2: eine zweite Ausführung der Anzeigeeinrichtung mit Gangschalter im Getriebe; und
- Figur 3: eine dritte Ausführung der Anzeigeeinrichtung mit Gangschalter an der Sperrkontur des Schalthebels.

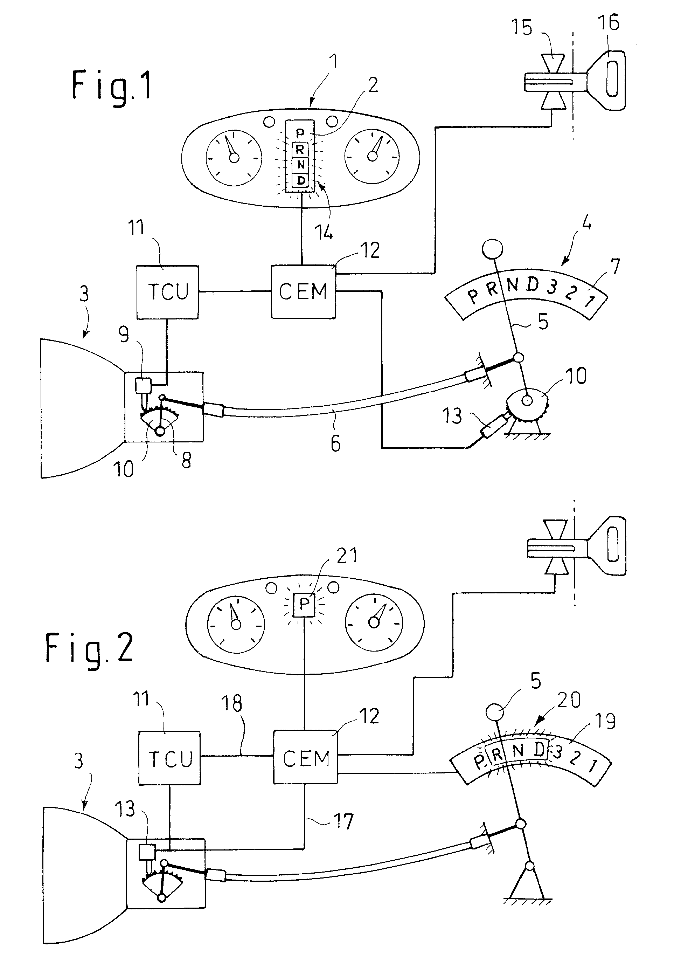

In Figur 1 ist schematisch eine Instrumentenanzeige 1 mit der Ganganzeige 2, ein automatisches Getriebe 3 und die Gangwähleinrichtung 4 gezeigt. Die Gangwähleinrichtung 4 weist einen Schalthebel 5 auf, der über einen Bowdenzug 6 mit dem Getriebe 3 verbunden ist und mittels dessen die Fahrstufen P, R, N, D, 3, 2 1 (7) eingelegt werden können. Im Getriebe 3 wirkt der Bowdenzug 6 auf eine Schaltwelle 8. Im Fahrbetrieb wird das Schaltsignal über den getriebeseitigen Gangschalter 9 abgegriffen, der über eine auf der Schaltwelle 8 angeordnete Rastscheibe 10 Signale entsprechend der eingelegten Fahrstufe erzeugt. Diese Signale werden an das Getriebesteuergerät 11 geleitet und von dort auf die Anzeigesteuerung 12. Diese steuert die Ganganzeige 2, wo die gewählte Gangstufe angezeigt wird, hier als Schaltschema entsprechend der Fahrstufen an der Gangwähleinrichtung 4, wobei die gewählte Fahrstufe hervorgehoben ist.

Bei ausgeschalteter Zündung wird das Getriebesteuergerät 11 abgeschaltet, während die Anzeigesteuerung 12 bestromt bleibt. Der Gangschalter 13 wirkt mit dem Schalthebel 5 der Gangwähleinrichtung 4 zusammen und greift über die Rastscheibe 10 die augenblicklich gewählte Fahrstufe ab. Der Gangschalter 13 übertragt ein entsprechendes Signal an die Anzeigesteuerung 12. Diese erkennt, ob die Parkstellung P korrekt eingelegt ist. Ist dies der Fall, erfolgt auf der Ganganzeige 2 keine weitere Anzeige. Ist P nicht korrekt eingelegt, erfolgt auf der Ganganzeige 2 ein warnender Hinweis, z. B. in Form von blinkenden Symbolen 14. Weiterhin ist die Anzeigensteuerung 12 mit der Schlüsselsperre 15 verbunden, so daß der Zündschlüssel 16 nicht abgezogen werden kann, wenn P nicht korrekt eingelegt ist.

Figur 2 zeigt eine weitere Anzeigevorrichtung ähnlich der in Figur 1. Hier wird das Schaltsignal für die Anzeigensteuerung 12 bei ausgeschalteter Zündung direkt aus dem im Getriebe 3 angeordneten Schaltsensor 9 übertragen. Dazu ist dieser über eine separate Signalleitung 17 direkt mit der Anzeigensteuerung 12 verbunden. Dabei kann die Signalleitung 17 direkt parallel zur Signalleitung 18 zwischen Getriebesteuereinheit 11 und Anzeigensteuerung 12 angeordnet sein. Der am Schalthebel 5 angeordnete Gangschalter entfällt damit.

Weiterhin ist die Ganganzeige hier zweigeteilt: eine erste Ganganzeige 19 ist direkt an der Gangwähleinrichtung 4 angeordnet.. Eine zweite Ganganzeige ist als einzelnes Leuchtelement, hier als Warnlampe 21 mit dem Symbol "P" gezeigt. Im Fahrbetrieb ist die erste Ganganzeige 19 aktiv und zeigt die eingelegten Gänge an, während die Warnlampe 21 nicht aktiv ist. Nur wenn bei ausgeschalteter Zündung der Parkgang P nicht korrekt eingelegt ist, leuchtet die Warnlampe 21 auf, entweder blinkend oder als Dauersignal. Die erste Ganganzeige 19 kann dann auch ein Warnsignal 20 anzeigen, muß aber nicht, da ja die Warnlampe 21 bereits ein Warnsignal anzeigt. Dies kann fahrzeugabhängig beliebig gestaltet werden.

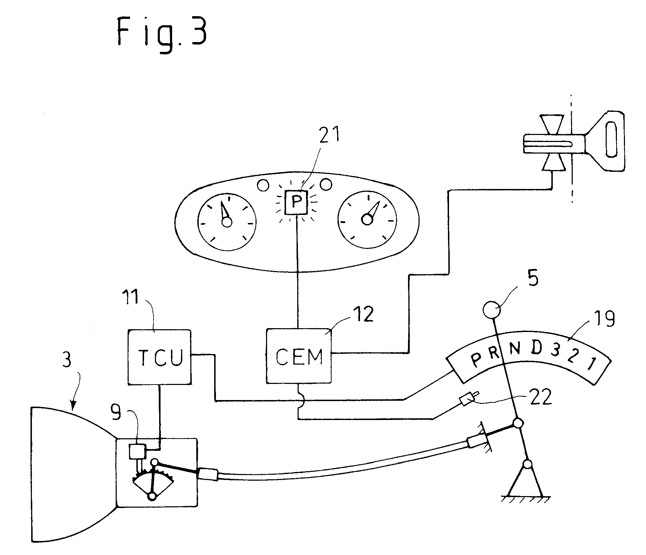

Bei der Anzeigenvorrichtung in Figur 3 sind die erste Ganganzeige 19 und die Warnlampe 21 getrennt angesteuert: die erste Ganganzeige 19 wird erhält die Signale direkt von der Getriebesteuereinheit 11, während die Warnlampe 21 von der Anzeigesteuerung 12 gesteuert wird. Demgemäß ist die Warnlampe 21 nur aktiv, wenn bei ausgeschalteter Zündung der Gang P nicht korrekt eingelegt ist. Von daher ist es in auch ausreichend, wenn der Gangschalter 22 nur die Parkstellung des Schalthebels 5 detektieren kann. Dies kann z. B. dadurch erfolgen, indem der Gangschalter 22 durch den Sperrstift der Parkverriegelung des Wählhebels 5 betätigt wird

## Patentansprüche

1. Anzeigeeinrichtung für ein automatisches Getriebe (3) in einem Kraftfahrzeug, mit einer elektrischen Ganganzeige (2) der gewählten Fahrstufe, mit einer Gangwähleinrichtung (4), bei der mittels eines Schalthebels (5) die Fahrstufen (7) geschaltet werden können, und einem Gangschalter, der Signale für zumindest eine der gewählten Fahrstufen (7) erzeugt,
**dadurch gekennzeichnet, daß**
Gangschalter (13) und eine Ganganzeige (2) über eine Anzeigesteuerung (12) so elektrisch miteinander verbunden sind, daß bei ausgeschalteter Zündung des Fahrzeuges die Ganganzeige (2) zumindest eine vom Gangschalter (13) ermittelte Fahrstufe (7) zur Anzeige bringt.

2. Anzeigeeinrichtung nach Anspruch 1,
**dadurch gekennzeichnet, daß**
die Ganganzeige (2) bei ausgeschalteter Zündung nur dann anzeigt, wenn der Schalthebel (5) nicht in bestimmten Fahrstufen steht.

3. Anzeigeeinrichtung nach Anspruch 2,
**dadurch gekennzeichnet, daß**
die Ganganzeige (2) bei ausgeschalteter Zündung nur dann anzeigt, wenn die der Schalthebel (5) nicht in der Fahrstufe P ist.

4. Anzeigeeinrichtung nach Anspruch 2 oder 3,
**dadurch gekennzeichnet, daß**
die Ganganzeige (2) bei ausgeschalteter Zündung blinkt, wenn der Gangschalter (5) nicht in den bestimmten Fahrstufen oder nicht in der Fahrstufe P ist.

5. Anzeigeeinrichtung nach einem der vorherigen Ansprüche,
**dadurch gekennzeichnet, daß**
bei eingeschalteter Zündung des Fahrzeuges die Ganganzeige (2) die vom Gangschalter (13) ermittelte Fahrstufe zur Anzeige bringt.

6. Anzeigeeinrichtung nach einem der vorherigen Ansprüche
**dadurch gekennzeichnet, daß**
der Gangschalter (22) nur die Fahrstufe P ermittelt.

7. Anzeigeeinrichtung nach einem der vorherigen Ansprüche,
**dadurch gekennzeichnet, daß**
der Gangschalter (13) mit dem Schalthebel (5) der Gangwähleinrichtung (4) zusammenwirkt.

8. Anzeigeeinrichtung nach einem der Ansprüche 1 bis 6
**dadurch gekennzeichnet, daß**
der Gangschalter (13) im automatischen Getriebe (3) angeordnet ist.

9. Anzeigeeinrichtung nach einem der vorherigen Ansprüche,
**dadurch gekennzeichnet, daß**
die Ganganzeige eine Anzeigesteuerung aufweist.

10. Anzeigeeinrichtung nach einem der Ansprüche 1 bis 8
**dadurch gekennzeichnet, daß**
eine Anzeigesteuerung (12) in einem separaten Anzeigemodul angeordnet ist.

11. Anzeigeeinrichtung nach einem der Ansprüche 1 bis 8
**dadurch gekennzeichnet, daß**
die Ganganzeige ein einzelnes Leuchtelement ist.

12. Kraftfahrzeug mit einer Anzeigevorrichtung nach einem der vorherigen Ansprüche,
**dadurch gekennzeichnet, daß**
eine Schlüsselsperre (15) für den Zündschlüssel (16) des Kraftfahrzeuges aufgrund von durch Ganganzeige (2), Anzeigesteuerung (12) und/oder Gangschalter (13) erzeugter elektrischer Signale aktiviert oder deaktiviert wird.

13. Kraftfahrzeug mit einer Anzeigevorrichtung nach einem der vorherigen Ansprüche,
**dadurch gekennzeichnet, daß**
die Stromversorgung für Ganganzeige (2), Anzeigesteuerung (12) und Gangschalter (13) unabhängig von der Stromversorgung für ein Getriebesteuergerät (11) ist.

14. Kraftfahrzeug nach Anspruch 13,
**dadurch gekennzeichnet, daß**
der im Getriebe (3) angeordnete Gangschalter (13) unabhängig vom Getriebesteuergerät (11) Signale an die Ganganzeige (2) liefert.

15. Kraftfahrzeug nach Anspruch 13 oder 14,
**dadurch gekennzeichnet, daß**
bei ausgeschalteter Zündung Ganganzeige (2), Anzeigesteuerung (12) und Gangschalter (13) mit einem geringem Strom versorgt werden und das Getriebesteuergerät (11) ausgeschaltet ist.

16. Kraftfahrzeug nach Anspruch 13, 14 oder 15,
**dadurch gekennzeichnet, daß**
nach dem Ausschalten der Zündung das Getriebesteuergerät (11) noch eine bestimmte Zeit aktiv ist und dann ausgeschaltet wird.

17. Kraftfahrzeug nach einem der Anspruch 12 bis 15,
**dadurch gekennzeichnet, daß**
Getriebesteuergerät (11) und Gangschalter (13) mit der Anzeigesteuerung (12) verbunden sind.

18. Kraftfahrzeug nach einem der vorherigen Ansprüche,
**dadurch gekennzeichnet, daß**
die Ganganzeige (2) im Instrumentenbrett angeordnet ist.

19. Kraftfahrzeug nach einem der vorherigen Ansprüche,
**dadurch gekennzeichnet, daß**
eine Ganganzeige an der Gangwähleinrichtung (4) angeordnet ist.
